# EUROPEAN PATENT APPLICATION

(11) **EP 2 775 429 A1**
(43) Date of publication of application: **10.09.2014**
(21) Application number: 13157629.0
(22) Date of filing: 04.03.2013
(51) Int. Cl.: G06Q 10/04, G06Q 10/06, G06Q 10/08, B65G 63/00

(54) **Scheduling work orders between automated stacking cranes**

(71) Applicant: ABB Technology Ltd, 8050 Zürich (CH)
(72) Inventor: Zanarini, Alessandro, 5400 Baden (CH); Henrikkson, Björn, 723 55 Västerås (SE); Israelsson Tampe, Stefan, 724 82 Västerås (SE); Norén, Henrik, 722 19 Västerås (SE); Schmitt, Susanne, 69198 Schriesheim (DE); Saliba, Sleman, 69115 Heidelberg (DE)
(74) Representative: Savela, Reino Aleksi

(57) **Abstract**

There is provided scheduling of work orders between at least two automated stacking cranes, ASCs. At least a first work order scheduled for a first ASC and a second work order scheduled for a second ASC are acquired. Responsibility of the first work order and the second work order by determining which one of the first ASC and the second ASC is to perform the first work order, and which one of the first ASC and the second ASC is to perform the second work order are determined. Priority of the first work order and the second work order is determined by determining an order in which the at least first work order and the second work order are to be performed.

## Description

### TECHNICAL FIELD

Embodiments presented herein relate to automated stacking cranes, and particularly to scheduling work orders between at least two such automated stacking cranes. The embodiments also relate to a computer program, an arrangement, and a controller arranged to perform the scheduling.

### BACKGROUND

A large part of all traded goods in the world is transported over sea by container ships. The ever increasing amount of international trade results in higher demands of container terminals all over the world to process (import, store, and/or export) more goods with an increased speed.

Container terminals e.g. in marine ports have the need to store containers for a time period ranging from hours to weeks. In general terms, a block in a container yard is a 3-dimensional container storage area between two ground rails. On the rails run automated stacking cranes (ASC) that straddle the containers. The ASCs are arranged to move the containers between locations in the yard. If the yard houses more than one ASC mounted on the same rail, the ASCs may usually not be able to pass each other and are therefore denoted as non-passing ASCs.

Traditionally, work orders for all ASCs in the container terminal are generated by a so-called terminal operating system (TOS). In particular, the ASCs on each container yard receive work orders from the TOS and execute them using a first-come-first-served strategy. The current first-come-first-served strategy means that the ASCs execute their work orders one after the other, and the ASC that receives its work order first has higher priority. If the ASCs have colliding work orders, or if one ASCs work order overlaps the other ASCs position, the ASC with lower priority has to yield and wait in order to avoid collisions.

Traditionally, a logistics system for the entire port handling all blocks and loading/unloading of the ships has been used. The port logistics system determines in which block a certain container should be stored and communicates this information to the TOS which issues work orders e.g. to insert a container in the appropriate block. The movement of a specific container is ordered by the port logistics system and the information is communicated to the TOS for the appropriate block and the specific container is removed from the block where it has been stored.

In the published US application U06/0182527, by Ranstrom et al., a system has been disclosed in a port logistics system which controls the movements of containers within each block by assigning orders to the cranes to perform a specific task.

A drawback of the system in U06/0182527 is that only the port logistics system has an overall picture of each block and the crane available for moving the containers within each block performs the assigned orders whenever the port logistics system detects a container to move to a more favorable position.

Hence, there is still a need for an improved container handling in container terminals.

### SUMMARY

An object of embodiments herein is to provide improved container handling in container terminals.

The inventors of the enclosed embodiments have realized that today, the moves by the ASC of the container can be divided into three types, depending on where the move takes place: from a transfer zone to a terminal yard for intermediate storing, from the yard to the transfer zone, or relocation within the yard (so as to improve position or to gain access to a below placed container). The inventors of the enclosed embodiments have further realized that today, any single instance of these move types is carried out by only one of the ASCs.

The inventors of the enclosed embodiments have realized that there are at least two scenarios in which the current work order strategy given by the TOS is not optimal. Firstly, if there is a high percentage of long work orders; i.e., a situation where the containers must travel a long distance (> 50% of the yard length), then the paths of the ASCs are often intersecting, and one ASC must often yield and wait for the other ASC in order to avoid collisions. During these circumstances, the yielding time of the ASCs is undesirably high. Secondly, if the workload is uneven between the two ends of the yard, the workload is also uneven between the ASCs. One ASC can stand idle while the other ASC is struggling to keep up with the work generated by the rest of the terminal. During these circumstances the asset utilization of the twin ASCs is undesirably low.

A particular object is therefore to provide scheduling of work orders between at least two ASCs, thereby enabling dynamic hand over of work orders between non-passing ASCs in a terminal yard.

According to a first aspect there is presented a method for scheduling work orders between at least two automated stacking cranes, ASCs. The method comprises acquiring at least a first work order scheduled for a first ASC and a second work order scheduled for a second ASC. The method further comprises determining responsibility of the first work order and the second work order by determining which one of the first ASC and the second ASC is to perform the first work order, and which one of the first ASC and the second ASC is to perform the second work order. The method further comprises determining priority of the first work order and the second work order by determining an order in which the at least first work order and the second work order are to be performed. The method further comprises determining whether or not to split at least one of the first work order and the second work order into partial work orders based on both the first work order and the second work order and in conjunction with determining responsibility and priority.

The container handovers are thereby arranged to reduce yielding operations and waiting times and to balance the work load between the ASCs. As a result thereof the ASC collaborate more efficiently and the container throughput is increased.

Advantageously the service times for transfer zones are thereby decreased.

Advantageously the total traveling time and distance are reduced, hence resulting in a more energy efficient operation.

Advantageously, since the ASCs collaborate more efficiently, the container throughput is increased. A high container throughput is one of the main objectives of container terminals since it reduces the berthing times for ships in the harbour.

Advantageously, the approach to increase efficiency is minimally invasive with respect to the existing information technology infrastructure of the ASCs. This makes the approach highly suitable for upgrades for existing terminals.

Advantageously, splitting work orders between ASCs can under the right conditions further reduce yielding operations and waiting times for the ASCs and balance the work load between them.

According to a second aspect there is presented a first controller for a first automated stacking crane, ASC, for scheduling work orders between the first ASC and a second ASC. The first controller is arranged to acquire a first work order scheduled for the first ASC. The first controller is further arranged to, in cooperation with a second controller of the second ASC, determine responsibility of the first work order and a second work order acquired by the second controller by determining which one of the first ASC and the second ASC is to perform the first work order, and which one of the first ASC and the second ASC is to perform the second work order. The first controller is further arranged to, in cooperation with the second controller, determine priority of the first work order and the second work order by determining an order in which the at least first work order and the second work order are to be performed. The first controller is further arranged to, in cooperation with the second controller, determine whether or not to split at least one of the first work order and the second work order into partial work orders based on both the first work order and the second work order and in conjunction with determining responsibility and priority.

According to a third aspect there is presented an arrangement for scheduling work orders between at least two automated stacking cranes, ASCs. The arrangement comprises a controller arranged to acquire at least a first work order scheduled for a first ASC and a second work order scheduled for a second ASC. The controller is further arranged to determine responsibility of the first work order and the second work order by determining which one of the first ASC and the second ASC is to perform the first work order, and which one of the first ASC and the second ASC is to perform the second work order. The controller is further arranged to determine priority of the first work order and the second work order by determining an order in which the at least first work order and the second work order are to be performed. The controller is further arranged to determine whether or not to split at least one of the first work order and the second work order into partial work orders based on both the first work order and the second work order and in conjunction with determining responsibility and priority.

According to a fourth aspect there is presented a computer program for scheduling work orders between at least two automated stacking cranes, ASCs, the computer program comprising computer program code which, when run on at least one controller, causes the at least one controller to perform a method according to the first aspect.

According to a fifth aspect there is presented a computer program product comprising a computer program according to the fourth aspect and a computer readable means on which the computer program is stored. According to embodiments the computer readable means are non-volatile computer readable means.

It is to be noted that any feature of the first, second, third, fourth and fifth aspects may be applied to any other aspect, wherever appropriate. Likewise, any advantage of the first aspect may equally apply to the second, third, fourth, and/or fifth aspect, respectively, and vice versa. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Figs 1 and 2 are schematic diagrams illustrating container terminals where embodiments presented herein may be applied;
Fig 3 is a schematic diagram showing functional modules of a controller;
Fig 4 shows one example of a computer program product comprising computer readable means;
Fig 5 schematically illustrates splitting of a work order into partial work orders; and
Figs 6 and 7 are flowcharts of methods according to embodiments.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

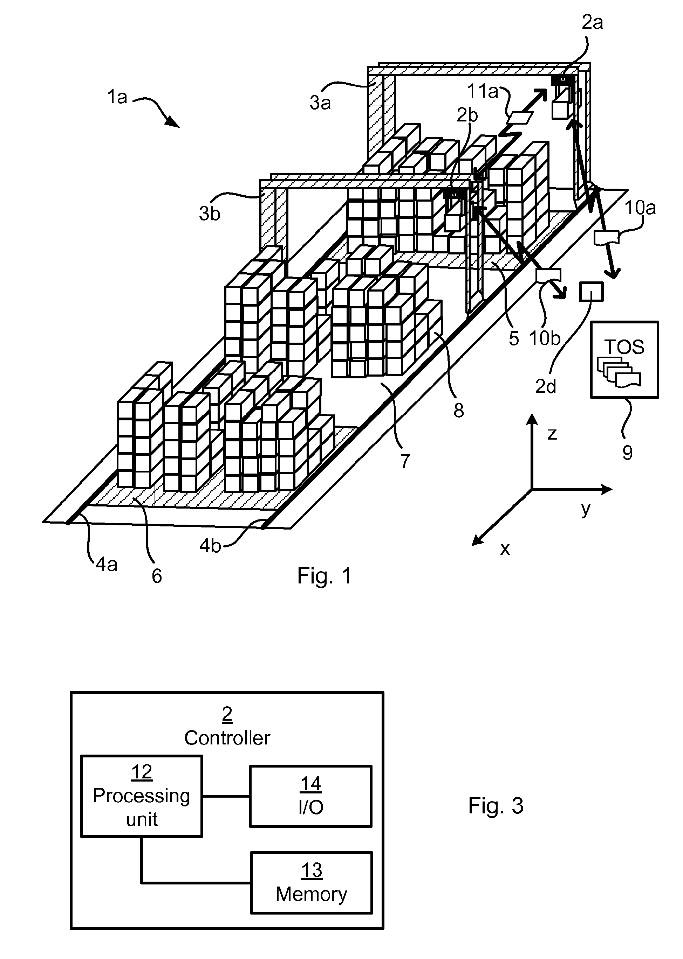

Fig 1 is a schematic diagram illustrating a container terminal 1a where embodiments presented herein can be applied. The container terminal 1a comprises two automated stacking cranes (ASC) 3a, 3b. The ASCs 3a, 3b are arranged on a pair of rails 4a, 4b. The ASCs 3a, 3b are thereby movably arranged between a first transfer zone 5 and a second transfer zone 6. An intermediate zone 7, also denoted a terminal yard, is located between the first transfer zone 5 and the second transfer zone 6. A plurality of containers 8 are placed in each zone 5, 6, 7. The ASCs 3a, 3b are arranged to move the containers 8 between the zones 5, 6, 7. In order to know which container to be moved the ASCs 3a, 3b are arranged to acquire work orders 10a, 10b. The work orders 10a, 10b are generated and transmitted from a terminal operating system (TOS) 9.

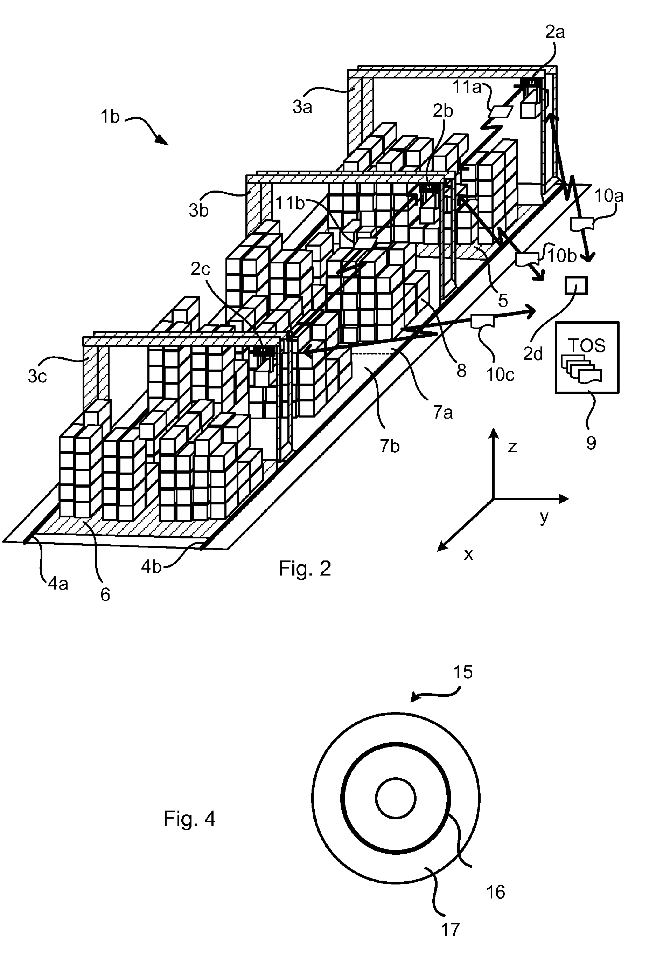

Fig 2 is a schematic diagram illustrating a container terminal 1b where embodiments presented herein can be applied. In comparison to the container terminal 1a of Fig 1, the container terminal 1b of Fig 2 comprises three automated stacking cranes (ASC) 3a, 3b, 3c movably arranged on a pair of rails 4a, 4b. As also illustrated in Fig 2, at least a first intermediate zone 7a and a second intermediate zone 7b may be located between the first terminal zone 5 and the second terminal zone 6.

The container terminals 1a and 1b of Figs 1 and 2 are typical examples of so-called "end-loaded" layouts which means that all containers 8 will enter and leave the yard through one of the terminal zones 5, 6 located at the two ends of the yard. As illustrated in Figs 1 and 2 the ASCs 3a, 3b, 3c have more or less the same working range within the yard. The difference is the two terminal zones 5, 6; some terminal zone layouts may allow partial access for all ASCs 3a, 3b, 3c but there are always positions in all terminal zones that can only be reached by one of the ASCs due to the fact that the ASC are mounted on the same pair of rails 4a, 4b and hence are non-passing.

Traditionally the ASC work orders 10a, 10b, 10c have been created and scheduled in detail by the TOS 9, and the ASCs 3a, 3b, 3c just execute the work orders 10a, 10b, 10c as described above; i.e., using a first-come-first-served strategy.

The embodiments disclosed herein relate to scheduling work orders between at least two automated stacking cranes (ASCs) 3a, 3b, 3c. In more detail, some embodiments concern a strategy for improving the efficiency of ASCs 3a, 3b, 3c in container terminals by enabling the ASCs 3a, 3b, 3c to split original work orders 10a, 10b, 10c to partial work orders and to cooperate when carrying out the (partial or original) work orders. The disclosed embodiments could be implemented using software and integrated with existing software that is currently running on each ASC 3a, 3b, 3c in the terminal 1a, 1b. In order to obtain such scheduling there is provided a controller 2, 2a, 2b, 2c, a method performed in at least one such controller 2, 2a, 2b, 2c, at least one computer program 16 comprising code, for example in the form of a computer program product 15, that when run on at least one controller2, 2a, 2b, 2c, causes the at least one controller 2, 2a, 2b, 2c to perform the methods disclosed herein.

Fig 3 schematically illustrates, in terms of a number of functional modules, the components of a controller 2. A processing unit 12 is provided using any combination of one or more of a suitable central processing unit (CPU), multiprocessor, microcontroller, digital signal processor (DSP), application specific integrated circuit (ASIC), field programmable gate arrays (FPGA) etc., capable of executing software instructions stored in a computer program product 15 (as in Fig 4), e.g. in the form of a memory 13. Thus the processing unit 12 is thereby arranged to execute methods as herein disclosed. The memory 13 may also comprise persistent storage, which, for example, can be any single one or combination of magnetic memory, optical memory, solid state memory or even remotely mounted memory. The controller may further comprise an input/output (I/O) interface 14 for receiving and providing information from other controllers 2, 2a, 2b, 2c, ASCs 3a, 3b, 3c, and TOS? 9. The processing unit 12 controls the general operation of the controller 2. Other components, as well as the related functionality, of the controller 2 are omitted in order not to obscure the concepts presented herein.

According to some embodiments the controller 2 is provided as a central controller 2d. The controller 2 may thus be arranged to control at least one, preferably at least two, ASCs 3a, 3b, 3c.

According to other embodiments the controller 2 is part of an ASC 3a, 3b, 3c. That is, according to embodiments each ASC 3a, 3b, 3c comprises a controller 2. Each ASC 3a, 3b, 3c may then be controlled by its own controller 2a, 2b, 2c. The controller 2 of a first ASC 3a is then denoted a first controller 2a, the controller 2 of a second ASC 3b is denoted a second controller 2b, the controller 2 of a third ASC 3c is denoted a third controller 2c, etc. The controller 2a, 2b, 2c of each ASC 3a, 3b, 3c may then cooperate with at least one other controller 2a, 2b, 2c of another ASC 3a, 3b, 3c so as to control its corresponding ASC 3a, 3b, 3c.

As the skilled person understands the embodiments presented herein are not limited to any particular number of ASCs 3a, 3b, 3c.

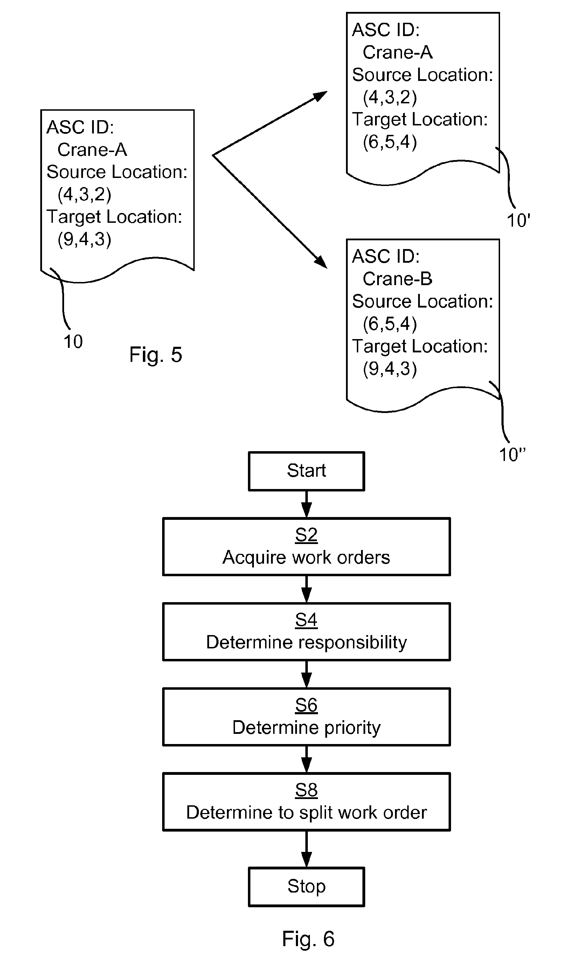

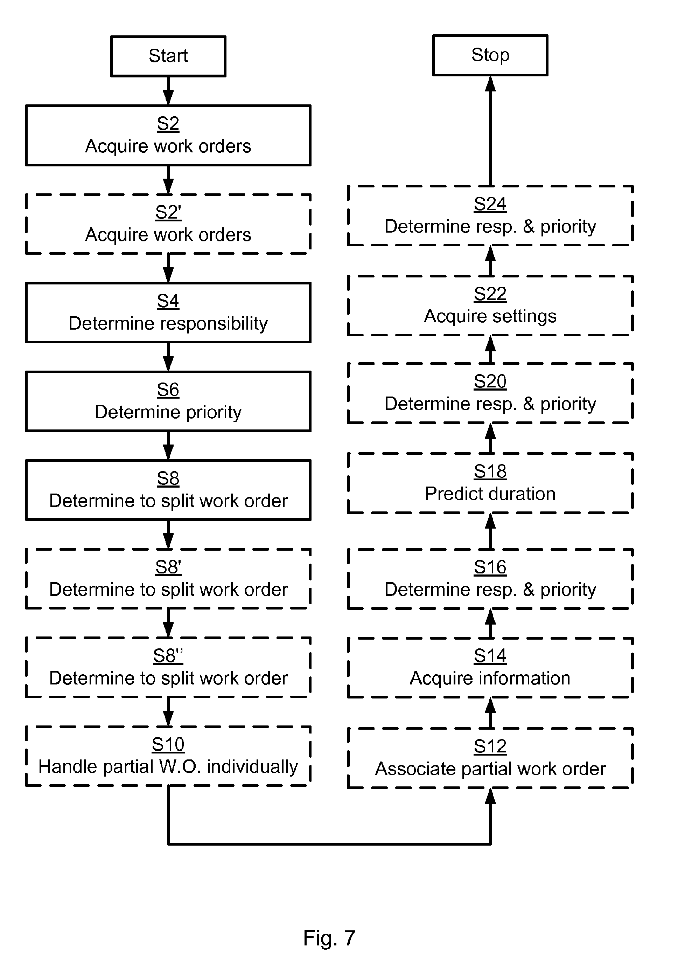

Figs 6 and 7 are flow charts illustrating embodiments of methods for scheduling work orders between at least two automated stacking cranes, ASCs. The methods are performed in the controller 2. The methods are advantageously provided as computer programs 16. Fig 4 shows one example of a computer program product 15 comprising computer readable means 17. On this computer readable means 17, a computer program 16 can be stored, which computer program 16 can cause the processing unit 12 and thereto operatively coupled entities and devices, such as the memory 13 and the I/O interface 14 to execute methods according to embodiments described herein. In the example of Fig 4, the computer program product 15 is illustrated as an optical disc, such as a CD (compact disc) or a DVD (digital versatile disc) or a Blu-Ray disc. The computer program product could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory. Thus, while the computer program 16 is here schematically shown as a track on the depicted optical disk, the computer program 16 can be stored in any way which is suitable for the computer program product 15.

Returning now to Figs 1 and 2, methods for scheduling work orders between at least two automated stacking cranes, ASCs, 3a, 3b, 3c will now be disclosed. According to some embodiments the first ASC 3a and the second ASC 3b are movably arranged along a common pair of tracks as defined by rails 4a and 4b. The first ASC 3a and the second ASC 3b are thereby non-passing. As in Fig 2, also a third ASC 3c may be movably arranged along said common pair of tracks.

Each controller 2a, 2b, 2c of the ASCs 3a, 3b, 3c is arranged to acquire work orders 10a, 10b, 10c. The work orders 10a, 10b, 10c may be provided by the TOS 9. The work orders 10a, 10b, 10c may relate to movement of a container 8 between a transfer zone 5, 6 and an intermediate zone 7, 7a, 7b. Hence, each work order 10a, 10b, 10c may comprise a set of control instructions identifying a particular container, a source position of the particular container, and target position of the particular container. According to embodiments the control instructions identify only a source position and a target position. As noted above, a container yard (block) is a 3-dimensional container storage area. The source position, target position and any intermediate position(s) may therefore be given as coordinates in a 3-dimensional space, such as a triple: (x, y, z). Further, the work order comprises an identity (ID) of the ASC 3a, 3b, 3c assigned to carry out the work order. The work orders 3a, 3b, 3c may further relate to movement of a container 8 between a first intermediate zone 7a and a second intermediate zone 7b. In general terms, a work order 3a, 3b, 3c may be provided as a quadruple: (ASC ID, container ID, source location, target location) or as a triplet: (ASC ID, source location, target location). At the controller 2 the work order 10a, 10b, 10c is translated into a set of control signals for moving the ASC 3a, 3b, 3c so as to perform the work order 10a, 10b, 10c. The control signals may thus comprise providing a moving means of the ASC 3a, 3b, 3c with instructions to move the ASC 3a, 3b, 3c from its current position to the source location, providing a lifting means of the ASC 3a, 3b, 3c to engage with the container 8 and to lift the container 8 from the source location and, providing the moving means of the ASC 3a, 3b, 3c with instructions to move the ASC 3a, 3b, 3c from the source location to the target location, and providing the lifting means of the ASC 3a, 3b, 3c to lower the container 8 to the source location and to disengage from the container 8.

A work order scheduled for the first ASC 3a is denoted a first work order 10a and a work order scheduled for the second ASC 3b is denoted a second work order 10b, etc. In a step S2 at least a first work order 10a scheduled for a first ASC 3a and a second work order 10b scheduled for a second ASC 3b are acquired. According to embodiments, also a third work order 10c scheduled for the third ASC 3c is acquired.

According to one embodiment at least one first work order 10a is acquired by the I/O interface of the first controller 2a of the first ASC 3a and at least one second work order 10b is acquired by the I/O interface of the second controller 2b of the second ASC 3b. However, according to another embodiment the at least one first work order 10a scheduled for a first ASC 3a and the at least one second work order 10b scheduled for a second ASC 3b are acquired by a common controller 2d.

It is then determined which one of the ASCs 3a, 3b, 3c that is to actually perform each work order 10a, 10b, 10c. Particularly, in a step S4 responsibility of the first work order 10a and the second work order 10b is determined. The responsibility is determined by determining which one of the first ASC3a and the second ASC 3b is to perform the first work order 10a, and which one of the first ASC 3a and the second ASC 3b is to perform the second work order 10b. Hence, although a work order 10a is scheduled for the first ASC 3a it may be determined that said work order 10a is to be performed by the second ASC 3b.

According to one embodiment responsibility is determined in cooperation between the processing unit 12 of the first controller 2a of the first ASC and the processing unit 12 of the second controller 2b of the second ASC. That is, the first controller 2a may be arranged to, in cooperation with the second controller 2b of the second ASC, determine the responsibility. In order to do so the first controller 2a and the second controller 2b may be arranged to exchange messages 11a, 11b comprising information relating *inter alia* to acquired work orders, positions, speeds, directions, working states, work load, etc., of the ASCs. The determination regarding which work order is to be performed by which ASC may thereby be made between the ASCs themselves in a distributed control manner. However, according to another embodiment the responsibility is determined by the common controller 2d.

In any case, the work orders 10a, 10b, 10c sent from TOS 9 can thereby be lifted from the ASC point of view to the yards point of view (comprising at least two ASCs). For redundancy reasons each ASC 3a, 3b may still be able to receive work orders 10a, 10b, but it does not matter to which ASC within the yard the work order is sent.

Responsibility for any third work orders 10c (see below) may be determined *mutatis mutandis.*

An ordering of the work orders 10a, 10b, 10c is also determined. Particularly, in a step S6 priority of the first work order 10a and the second work order 10b is determined. The priority is determined by determining an order in which the at least first work order and the second work order are to be performed.

Parameters for selecting the ASC 3a, 3b, 3c for performing a work order 10a, 10b, 10c and in what order the work orders 10a, 10b, 10c are to be performed are disclosed below.

According to one embodiment priority is determined in cooperation between the processing unit 12 of the first controller 2a of the first ASC and the processing unit 12 of the second controller 2b of the second ASC. That is, the first controller 2a may be arranged to, in cooperation with the second controller 2b of the second ASC, determine the priority. In order to do so the first controller 2a and the second controller 2b may be arranged to exchange messages 11a, 11b comprising information relating *inter alia* to acquired work orders. However, according to another embodiment the priority is determined by the common controller 2d.

Priority for any third work orders 10c (see below) may be determined *mutatis mutandis.*

A work order 10a, 10b, 10c provided by the TOS 9 may be split into several partial work orders. The splitting may involve a work order involving a movement of a container from a source location to a target location to involve movement of the container from the source location to at least one intermediate location and then further movement to the target location. The splitting may thus result in containers 8 being dropped off at an intermediate storage position and at a later point in time being picked up (perhaps by another ASC than the ASC which dropped the container at the intermediate storage position) and moved to the target location (or another intermediate storage position). In a step S8 it is therefore determined whether or not to split at least one of the first work order and the second work order into partial work orders 10', 10". The determination is based on both the first work order and the second work order and is performed in conjunction with the step S4 of determining responsibility and the step S6 of determining priority. The determination in step S8 may be performed by the first controller 2a of the first ASC 3a in cooperation with the second controller 2b of the second ASC 3b. Alternatively, the determination in step S8 may be performed by the common controller 2d.

There may be different ways to determined whether or not to split at least one of the first work order and the second work order into partial work orders. According to one embodiment all work orders are considered collectively when determining splitting. Thereby a globally optimal scheduling of the work orders may be obtained. Particularly, a plurality of third work orders may be acquired, step S2', in addition to the already acquired first and second work orders. Each one of the plurality of third work orders is scheduled for one of the first ASC 3a and the second ASC 3b. The determination in step S8 may then also take into consideration the plurality of third work orders. Particularly, in a step S8', it may be determined whether or not to split at least one of the first work order, the second work order and the plurality of third work orders into partial work orders based on all of the first work order, the second work order and the plurality of third work orders. The splitting determination in step S8' may be performed by optimizing a global cost function subject to certain criteria, such as utility, storage cost, etc. Additional and/or alternative factors, parameters and considerations on which the determination of responsibility, priority and/or splitting may be based are provided below. Further, the splitting determination in step S8' may be performed prior to executing any of the first work order, the second work order and the plurality of third work orders. The determination in step S8' may be performed by the first controller 2a of the first ASC 3a in cooperation with the second controller 2b of the second ASC 3b. Alternatively, the determination in step S8 may be performed by the common controller 2d.

According to one embodiment the determination whether or not to split at least one of the first work order and the second work order into partial work orders is alternatively or additionally sequentially performed. The splitting determination may thereby take into account the current load of the ASCs 3a, 3b. A new splitting determination may, for example, be repeated after each execution of a work order or partial work order. Thus, particularly, whether or not to split at least one of any remaining acquired but un-executed work order or partial work order may, in a step S8", be determined after each execution of one work order or partial work order. The splitting determination in step S8" is based on all remaining un-executed work orders and partial work orders and is performed in conjunction with determining responsibility and priority of any remaining un-executed work order or partial work order. The splitting determination in step S8' may be performed by optimizing a local cost function (considering all remaining un-executed work orders and partial work orders) subject to certain criteria, such as utility, storage cost, etc. The splitting determination in step S8' may additionally or alternatively be based on a set of heuristics rules. Additional and/or alternative factors, parameters and considerations on which the determination of responsibility, priority and/or splitting may be based are provided below. The decision whether or not to split a work order may thereby be continuously performed throughout execution of the work orders by the ASCs, thus resulting in local optimization of the work load of the ASCs. The determination in step S8" may be performed by the first controller 2a of the first ASC 3a in cooperation with the second controller 2b of the second ASC 3b. Alternatively, the determination in step S8 may be performed by the common controller 2d.

Each partial work order may, in a step S10, be handled as an individual work order during the steps of determining responsibility and priority. Each one of the partial work orders may, in a step S12, be associated with a set of instructions. The set of instructions may pertain to intermediate movement of at least one container. For example, the set of instructions may comprise instructions for at least one of placing a container 8 at an intermediate storage position, collecting the container 8 from the intermediate storage position, and placing the container 8 at a target storage position. Additionally, the set of instructions may comprises instructions for at least one of collecting another container from the intermediate storage position, and placing the other container at a further intermediate storage position prior to placing the container 8 at the intermediate storage position. Along with the determination of responsibility, priority selection and/or splitting, the controller 2 may thus be arranged to keep track of container positions, such as containers that are currently located at intermediate storage positions.

Fig 5 schematically illustrates an original work order 10 being split into two partial work orders 10' and 10". The original work order 10 pertains to a work order scheduled by the TOS 9 for an ASC with ID Crane-A and involves movement of a container located at a source location with coordinates (4, 3, 2) to a target location with coordinates (9, 4, 3). During the splitting process it is determined that the container scheduled to be moved is first to be moved to an intermediate location with coordinates (6, 5, 4). Hence, the original work order 10 is to be split into a first partial work order 10' and a second partial work order 10" where the target location of the first partial work order 10' is equal to the intermediate location which in turn is also equal to the source location of the second partial work order 10". During the splitting process it is further determined that the first partial work order 10' is to be performed by the ASC with ID Crane-A and that the second partial work order 10" is to be performed by the ASC with ID Crane-B. When carrying out the original work order 10, the ASC denoted Crane-A thus first collects the container located at coordinates (4, 3, 2) and delivers said container at coordinates (6, 5, 4) so as to complete the first partial work order 10'. The ASC denoted Crane-B then collects the container located at coordinates (6, 5, 4) and delivers said container at coordinates (9, 4, 3) so as to complete the second partial work order 10" and hence complete the original work order 10.

As the skilled person understands, a work order may be split into at least two partial work orders. Further, each partial work order may in turn be split into further partial work orders. The splitting decision may be performed in real time at the latest possible time, and therefore the at least one intermediate position can be selected carefully with regards to the ASCs' 3a, 3b, 3c current status, position, etc. as well as possible knowledge of the following work orders. In general terms, the proposed strategy comprises heuristic rules for detecting scenarios where splitting a work order in two parts is beneficial.

The determination of responsibility, priority and/or splitting may be performed dynamically and may be based on a number of factors, parameters and considerations. In order for the determination of responsibility, priority and/or splitting to be based on the factors, parameters and considerations the factors, parameters and considerations may be shared between the controllers 2a, 2b, 2c of the ASCs 3a, 3b, 3c in a cooperative manner and then compared.

The determination of responsibility, priority and/or splitting may for example be based at least one of position, speed, direction, and working state of the ASC(s) 3a, 3b, 3c. For example, positional information of the ASC(s) 3a, 3b, 3c may be used such that a work order is associated with the ASC being located closest to the source location of the container. For example, speed information of the ASC(s) 3a, 3b, 3c may be used such that a work order is associated with the ASC currently moving at the lowest speed. For example, direction information of the ASC(s) 3a, 3b, 3c may be used such that a work order is associated with the ASC currently moving towards the container associated with the work order. For example, working state information of the ASC(s) 3a, 3b, 3c may be used such that a work order is associated with an ASC being in an idle state. In a step S14 at least one of a current position, a current speed, a current direction, and a current working state of at least one of the first ASC 3a and the second ASC 3b may therefore be acquired. The responsibility and priority may then be determined, step S16, based on the acquired current position, current speed, and/or current working state of at least one of the first ASC 3a and the second ASC 3b.

The determination of responsibility, priority and/or splitting may for example be based on further work orders. For example, information of further work orders of the ASC(s) 3a, 3b, 3c may be used such that a work order is associated with the ASC currently being associated with the fewest work orders. For example, information of further work orders of the ASC(s) 3a, 3b, 3c may be used such that a work order is associated with the ASC currently being associated with work orders relating to containers clustered to a particular segment of the yard.

The determination of responsibility, priority and/or splitting may for example be based on a predicted duration of on-going or queued work orders. For example, information of further work orders of the ASC(s) 3a, 3b, 3c may be used such that a work order is associated with the ASC currently being associated with the shortest duration of an on-going work order and/or with the fewest number of queued work orders. In a step S18 a duration of at least one on-going or queued work order scheduled for one of the first ASC 3a and the second ASC 3b may therefore be predicted. The responsibility and priority may then be determined, step S20, based on the prediction.

The determination of responsibility, priority and/or splitting may for example be based on received settings. In a step S22 settings relating to at least one of: waiting time for a container to be picked up from a transfer zone, and energy consumption, may therefore be acquired. The settings may be acquired from user input. The responsibility and priority may then be determined, step S24, based on the acquired settings. The settings may originate from user input and/or could make the determination of responsibility and/or priority to focus on specific tasks, such as minimizing the waiting time for vehicles in one of the transfer zones, minimizing energy consumption, etc. and/or distributing the operating load evenly over the ASCs 3, 3b, 3c in the block; minimising use of one ASC while waiting for e.g., maintenance.

The determination of responsibility, priority and/or splitting may for example be based on whether a work order concerns an internal transfer of a container or for a transfer of a container out of the block; how many more work orders for this container (lift, move, drop) are planned in the block; and/or calculated wait time for any of the other ASCs during the present work order.

In summary, according to the herein disclosed embodiments the above noted issues concerning throughput are in general terms resolved or at least mitigated by the ASCs 3a, 3b, 3c being arranged to dynamically initiating container handovers between the ASCs 3a, 3b, 3c by means of the disclosed controller operations. Particularly, the decision regarding which part of a given work order is to be performed by which ASCs 3a, 3b, 3c may be made between the ASCs 3a, 3b, 3c themselves in a distributed control manner. Work orders from the TOS 9 may be split into several partial work orders. Containers 8 may be dropped at one or more intermediate storage positions and picked up later and placed at their target positions. Different ASCs may perform different partial work orders.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method for scheduling work orders (10, 10a, 10b, 10c) between at least two automated stacking cranes, ASCs, (3a, 3b, 3c), the method comprising:
acquiring (S2) at least a first work order (10a) scheduled for a first ASC (3a) and a second work order (10b) scheduled for a second ASC (3b);
determining (S4) responsibility of the first work order and the second work order by determining which one of the first ASC and the second ASC is to perform the first work order, and which one of the first ASC and the second ASC is to perform the second work order;
determining (S6) priority of the first work order and the second work order by determining an order in which the at least first work order and the second work order are to be performed; and
determining (S8) whether or not to split at least one of the first work order and the second work order into partial work orders (10', 10") based on both the first work order and the second work order and in conjunction with determining responsibility and priority.

2. The method according to claim 1, further comprising:
handling (S10) each partial work order as an individual work order during said steps of determining responsibility and priority.

3. The method according to claim 1 or 2, further comprising:
acquiring (S2') a plurality of third work orders, each of which being scheduled for one of the first ASC and the second ASC; and
determining (S8') whether or not to split at least one of the first work order, the second work order and the plurality of third work orders into partial work orders based on all of the first work order, the second work order and the plurality of third work orders.

4. The method according to any one of the preceding claims, further comprising:
determining (S8"), after execution of each single work order or partial work order, whether or not to split at least one of any remaining acquired but un-executed work order or partial work order based on all remaining un-executed work orders and partial work orders and in conjunction with determining responsibility and priority of said any remaining un-executed work order or partial work order.

5. The method according to any one of the preceding claims, further comprising:
associating (S12) each one of said partial work orders with a set of instructions, the set of instructions pertaining to intermediate movement of at least one container (8).

6. The method according to claim 5, wherein the set of instructions comprises instructions for at least one of placing said at least one container at an intermediate storage position, collecting said at least one container from the intermediate storage position, and placing said at least one container at a target storage position.

7. The method according to any one of the preceding claims, further comprising:
acquiring (S14) at least one of a current position, a current speed, a current direction, and a current working state of at least one of the first ASC and the second ASC; and
determining (S16) responsibility and priority based on at least one of said current position, said current speed, said current direction, and said current working state of said at least one of the first ASC and the second ASC.

8. The method according to any one of the preceding claims, further comprising:
predicting (S18) a duration of at least one on-going or queued work order scheduled for one of the first ASC and the second ASC; and
determining (S20) responsibility and priority based on said prediction.

9. The method according to any one of the preceding claims, further comprising:
acquiring (S22) settings relating to at least one of waiting time for a container (8) to be picked up from a transfer zone (5, 6), and energy consumption; and
determining (S24) responsibility and priority based on said acquired settings.

10. The method according to any one of the preceding claims, wherein the first work order is acquired by a first controller (2a) of the first ASC and the second work order is acquired by a second controller (2b) of the second ASC, and wherein said steps of determining responsibility and priority are performed by said first controller in cooperation with said second controller.

11. The method according to any one of the preceding claims, wherein each one of the first work order and the second work order relates to movement of a container (8) between a transfer zone (5, 6) and an intermediate zone (7, 7a, 7b).

12. The method according to any one of the preceding claims, wherein the first ASC and the second ASC are arranged to be placed along a common pair of tracks defined by rails (4a, 4b) such that the first ASC and the second ASC are non-passing.

13. A first controller (2a) for a first automated stacking crane, ASC, (3a), for scheduling work orders between the first ASC (3a) and a second ASC (3b),
the first controller being arranged to acquire a first work order (10a) scheduled for the first ASC;
the first controller further being arranged to, in cooperation with a second controller (2b) of the second ASC, determine responsibility of the first work order and a second work order (10b) acquired by the second controller by determining which one of the first ASC and the second ASC is to perform the first work order, and which one of the first ASC and the second ASC is to perform the second work order;
the first controller further being arranged to, in cooperation with the second controller, determine priority of the first work order and the second work order by determining an order in which the at least first work order and the second work order are to be performed; and
the first controller further being arranged to, in cooperation with the second controller, determine whether or not to split at least one of the first work order and the second work order into partial work orders (10', 10") based on both the first work order and the second work order and in conjunction with determining responsibility and priority.

14. An arrangement for scheduling work orders between at least two automated stacking cranes, ASCs, (3a, 3b, 3c), the arrangement comprising:
a controller (2, 2a, 2b, 2c, 2d) arranged to acquire at least a first work order (10a) scheduled for a first ASC (3a) and a second work order (10b) scheduled for a second ASC (3b);
the controller further being arranged to determine responsibility of the first work order and the second work order by determining which one of the first ASC and the second ASC is to perform the first work order, and which one of the first ASC and the second ASC is to perform the second work order;
the controller further being arranged to determine priority of the first work order and the second work order by determining an order in which the at least first work order and the second work order are to be performed; and
the controller further being arranged to determine whether or not to split at least one of the first work order and the second work order into partial work orders (10', 10") based on both the first work order and the second work order and in conjunction with determining responsibility and priority.

15. A computer program (16) for scheduling work orders between at least two automated stacking cranes, ASCs, (3a, 3b, 3c), the computer program comprising computer program code which, when run on at least one controller (2, 2a, 2b, 2c, 2d), causes the at least one controller to:
acquire at least a first work order (10a) scheduled for a first ASC (3a) and a second work order (10b) scheduled for a second ASC (3b);
determine responsibility of the first work order and the second work order by determining which one of the first ASC and the second ASC is to perform the first work order, and which one of the first ASC and the second ASC is to perform the second work order;
determine priority of the first work order and the second work order by determining an order in which the at least first work order and the second work order are to be performed; and
determine whether or not to split at least one of the first work order and the second work order into partial work orders (10', 10") based on both the first work order and the second work order and in conjunction with determining responsibility and priority.

16. A computer program product (15) comprising a computer program (16) according to claim 15 and a computer readable means (17) on which the computer program is stored.
